# FASCICULE DE BREVET EUROPEEN

(11) **EP 1 805 118 B1**
(45) Date de publication et mention de la délivrance du brevet: **07.04.2010**
(21) Numéro de dépôt: 05802515.6
(22) Date de dépôt: 14.09.2005
(51) Int. Cl.: C04B 35/109

(54) **PRODUIT AZS A EXSUDATION REDUITE**
AZS-PRODUKT MIT VERRINGERTEM SCHWITZVERHALTEN
REDUCED SWEATING AZS PRODUCT

(30) Priorité: 20.09.2004 FR 0409914
(43) Date de publication de la demande: 11.07.2007
(73) Titulaire: Saint-Gobain Centre de Recherches et d'Etudes Européen, 92400 Courbevoie (FR)
(72) Inventeur: BOUSSANT-ROUX, Yves, F-84140 MONTFAVET (FR); CABODI, Isabelle, F-84300 CAVAILLON (FR); GAUBIL, Michel, F-84000 AVIGNON (FR)
(74) Mandataire: Sartorius, Jérome
(86) Numéro de dépôt international: PCT/FR2005/002277
(87) Numéro de publication internationale: WO 2006/032757

(56) Documents cités:
- US-A- 2 271 366
- US-A- 2 438 552

## Description

La présente invention concerne un produit réfractaire fondu et coulé de type AZS (Alumine-Zircone-Silice) présentant un faible taux d'exsudation de sa phase vitreuse aux températures de fonctionnement des fours de verrerie dans lesquels il est utilisé. L'invention se rapporte également à l'utilisation de ce produit dans les superstructures d'un four de verrerie.

Les produits réfractaires fondus et coulés de type AZS peuvent être obtenus par fusion d'un mélange de matières premières appropriées dans un four à arc électrique ou toute autre technique de fusion adaptée à ces produits. Le liquide fondu est ensuite coulé dans-un moule permettant d'obtenir directement des pièces de forme. En général, le produit est alors soumis à un cycle de refroidissement contrôlé pour être amené à température ambiante sans fracturation. Cette opération est appelée « recuisson » par l'homme de l'art.

Les produits AZS sont connus depuis plusieurs dizaines d'années dans leur application à des fours de verrerie dans lesquels ils entrent en contact avec le verre fondu. La recherche s'est efforcée d'en améliorer la résistance à la corrosion au verre fondu et à la fissuration.

US-A-2,271,366 décrit les premiers exemples de réalisation de ces produits. L'analyse cristallographique de ces exemples montre des cristaux de zircone et de corindon, c'est-à-dire d'alumine alpha, dans une matrice (ou « phase ») vitreuse. US-A-2,271,366 n'étudie pas l'influence des oxydes alcalins. En outre, les exemples du tableau 1 de US-A-2,271,366 indiquent que lorsque le taux de zircone est inférieur à 22,1 % une phase cristalline de mullite apparaît, ce qui conduit à un affaiblissement de la résistance à la corrosion par le verre fondu.

US-A-2,438,552 décrit des produits AZS comportant, en poids, 45 à 70% de Al₂O₃, 14 à 40 % de ZrO₂, 9 à 12% de SiO₂, 1 à 2,2% de Na₂O, 0,4 à 1,7 % d'oxyde de fer et de 0,2 à 0,8 % de MgO+CaO. Ces produits, comportant un grand nombre d'oxydes, sont cependant coûteux à fabriquer. US-A-2,438,552 ne suggère pas que certains de ces oxydes soient optionnels.

US 2,271,366, équivalent de FR 883 990, concerne des produits AZS comportant plus de 75% de Al₂O₃+ZrO₂ et pouvant éventuellement contenir des espèces alcalines telles que Na₂O. Le taux de silice doit alors être inférieur à 10%.

Aucun des documents US-A-2,271,366, US-A-2,438,552 et US 2,271,366 n'aborde cependant le problème de l'exsudation de la phase vitreuse à l'origine de défauts dans le verre.

EP 0 939 065 B1 propose de réduire le taux d'exsudation des produits AZS contenant 20 à 59% de zircone en ajoutant B₂O₃, P₂O₅ et au moins un des oxydes du groupe SnO₂, ZnO, CuO et MnO₂. L'ajout de ces oxydes, qui ne sont pas présents comme impuretés dans les matières premières classiques, conduit à un surcoût de fabrication et à d'éventuels problèmes de coloration.

Les produits AZS commercialisés actuellement, tels que l'ER-1681, l'ER-1685 ou l'ER-1711 fabriqués par la Société Saint-Gobain SEFPRO, contiennent, en poids, de 45 à 50% d'Al₂O₃, de 32 à 40% de ZrO₂, de 12 à 16% de SiO₂ et environ 1 % de Na₂O. Ces produits conviennent bien pour la fabrication des fours de verrerie, notamment pour les zones en contact avec le verre fondu, la superstructure, c'est-à-dire les murs sous la voûte hors de contact avec le verre fondu, et la voûte des fours verriers. Cependant, pour réduire le nombre de défauts et ainsi améliorer les rendements, les produits utilisés aujourd'hui en superstructures et voûtes ne donnent pas entière satisfaction. Aux températures de fonctionnement des fours de verrerie dans lesquels ils sont utilisés, c'est-à-dire à environ 1500°C au niveau de la superstructure, des problèmes d'exsudation de leur phase vitreuse peuvent apparaître.

Il existe donc un besoin pour des nouveaux produits réfractaires AZS fondus et coulés comportant un minimum de constituants différents et présentant un faible taux d'exsudation à environ 1500°C.

Le but de l'invention est de répondre à ce besoin.

Selon l'invention, on atteint ce but au moyen d'un produit réfractaire fondu et coulé de type AZS, remarquable en ce qu'il présente la composition chimique suivante, en pourcentages en poids :
ZrO₂ : 15,5 à 22 %,
SiO₂: 10,5 à 15%
Na₂O+K₂O+Li₂O : 1,0 à 2,5 %
Impuretés : < 1 %.
Al₂O₃ : complément à 100 %.

Les inventeurs ont ainsi découvert que, de manière surprenante, on pouvait réduire l'exsudation des produits AZS en ajustant les rapports entre les différents constituants des produits AZS classiques, sans ajouter d'espèces supplémentaires. La fabrication en est simplifiée et d'un coût réduit.

Comme on le verra plus en détails dans la suite de la description, le domaine d'analyse chimique du produit selon l'invention permet également d'assurer une bonne faisabilité industrielle des pièces.

Sauf mention contraire, tous les pourcentages sont des pourcentages en poids.

Par « impuretés », on entend les constituants suivants, présents dans les matières premières utilisées ou résultant de la fabrication du produit : les halogènes, par exemple le fluor, le chlore..., les oxydes de calcium, de magnésium, de bore, de phosphore, de chrome, de titane et de fer. La teneur totale en impuretés est inférieure à 1 % et, de préférence, la teneur de chaque espèce d'impureté est inférieure à 0,5 %. De préférence encore la teneur totale en impuretés est inférieure à 0,5 % et/ou la teneur de chaque espèce d'impureté est inférieure à 0,1 %.

La teneur en zircone s'est révélée avoir une influence majeure sur l'exsudation et doit être maintenue inférieure à 22%, de préférence inférieure à 19%.

Par contre, elle ne doit pas être trop basse sinon le produit perd de sa résistance en service. En effet, la zircone est un constituant très réfractaire et qui offre une très bonne résistance chimique à haute température. Selon l'invention, la teneur en ZrO₂ est supérieure à 15,5 %, de préférence à 16%.

Les inventeurs ont également découvert que le rapport en poids Al₂O₃ / ZrO₂ influence l'efficacité de la résistance à l'exsudation. De préférence, le rapport en poids Al₂O₃ / ZrO₂ est supérieur ou égal à 2,9, de préférence à 3, de préférence encore 3,7. Selon l'invention, le rapport en poids Al₂O₃ /ZrO₂ est de préférence inférieur ou égal à 5,5.

La teneur en silice est supérieure ou égale à 10,5 %, de préférence 12 %. Avantageusement, la faisabilité du produit en est améliorée. La faisabilité est représentative du taux de pièces ne présentant pas de fissures après fabrication les rendant non conformes à une application dans un four de verrerie.

La teneur en silice est inférieure ou égale à 15 %. Avantageusement, la résistance mécanique à haute température, c'est-à-dire à plus de 1500°C, en est améliorée.

La silice est le constituant principal de la phase vitreuse. De préférence le taux de phase vitreuse est supérieur ou égal à 17%, de préférence 19%, et/ou inférieur ou égal à 24%, de préférence 22%, en pourcentages en poids.

La présence d'oxyde de sodium et/ou de potassium et/ou de lithium dans les produits AZS est bien connue de l'homme de métier. Elle est classiquement nécessaire pour conférer à la phase vitreuse des caractéristiques physiques et chimiques adaptées. Selon l'invention, la teneur en Na₂O+K₂O+Li₂O doit être comprise entre 1 et 2,5 %.

De préférence, le rapport pondéral SiO₂/(Na₂O+K₂O+Li₂O) est supérieur à 7 et/ou inférieur à 9, de préférence encore inférieur à 8. Avantageusement, la résistance à l'exsudation des produits selon l'invention en est améliorée.

Pour des raisons de coût, on utilise de préférence l'oxyde de sodium.

Les produits selon l'invention diffèrent des produits AZS classiques par leur composition cristalline particulière. Ils sont en effet constitués exclusivement de cristaux de corindon et de zircone libres dans une phase vitreuse et sont exempts de cristaux eutectiques alumine-zircone.

Les exemples non limitatifs suivants sont donnés dans le but d'illustrer l'invention.

Les produits fabriqués pour ces exemples sont élaborés à partir de matières premières « classiques ». En particulier, on a utilisé de l'alumine, du sable de zircon, du carbonate de sodium ainsi que de la zircone CC10 commercialisée par la Société Saint-Gobain ZIRPRO.

Les impuretés sont, pour leur majeure partie, constituées des oxydes de calcium et de magnésium.

Les produits ont été obtenus par fusion des matières premières dans un four de fusion électrique de type Héroult, la charge des matières premières étant chauffée au moyen d'un arc long.

Des conditions oxydantes et un brassage ont été maintenus pendant le chauffage par insufflation d'oxygène.

Le tableau 1 fournit les compositions de produits testés ainsi que le résultat des tests subis par ces produits.

L'exemple 1 correspond à un produit de référence.

« PV » signifie « Phase Vitreuse ». « ND » signifie « Non Déterminé ».

La faisabilité est jugée « bonne » si un bloc, de dimensions 250x200x250mm, ne présente pas de fissuration dite « traversante » et/ou de longueur supérieure à 20 mm. De tels défauts peuvent en effet conduire au morcellement complet du bloc lors de son utilisation en four de verrerie.

Le test A permet d'évaluer la résistance des produits à l'exsudation. Des échantillons des produits testés, sous la forme de barreaux d'une longueur de 100 mm et d'un diamètre de 24 mm, sont soumis à deux cycles de 4 heures à 1500°C, les montée et descente en température étant de 100°C/h. On mesure la variation de volume (en %) de l'échantillon suite à ces deux cycles, ce qui correspond à la valeur d'exsudation exprimée en %. On considère qu'un produit est particulièrement avantageux lorsque cette variation de volume est inférieure à 1,5 %, celle obtenue avec le produit de référence étant de 3,5 %.

Le test B permet d'évaluer la résistance à la corrosion en phase vapeur. En effet, il existe dans les fours de verrerie une atmosphère corrosive due à la volatilisation de certains éléments entrant dans la composition du verre en élaboration. Cette atmosphère corrosive transforme les produits à haute température et entraîne un affaiblissement qui peut se traduire par une déstructuration en service. Le test B est mené à 1500°C pendant 100 heures dans une atmosphère sodique. Le tableau 1 fournit l'épaisseur, en mm, de la zone transformée. On considère qu'un produit ne peut être acceptable que si cette épaisseur est inférieure à celle obtenue avec le produit de référence, c'est-à-dire inférieure à 5,5 mm.

Le test C permet d'évaluer la résistance des produits à l'affaissement sous charge. Il consiste à mesurer la déformation d'un échantillon soumis à une charge de 0,2 MPa lors d'une montée rapide en température, à 250°C/h, jusqu'à atteindre 1745°C. On mesure la température à laquelle l'échantillon s'affaisse de 0,25%. Cette température est donnée en °C dans le tableau 1. On considère qu'un produit ne peut être acceptable que si cette température est au moins celle obtenue avec le produit de référence, c'est-à-dire 1740°C.

**Tableau 1**

| N° | Al₂O₃ | ZrO₂ | SiO₂ | Na₂O | PV (%) | Al₂O₃/ZrO₂ | SiO₂/Na₂O | Faisabilité | Test A (%) | Test B (mm) | Test C (°C) |
|---|---|---|---|---|---|---|---|---|---|---|---|
| 1 | 53,6 | **31** | 14 | 1,4 | 21 | 1,7 | **10** | Bonne | 3,5 | 5,5 | 1740 |
| 2 | 52,9 | **30,1** | 15 | 2,0 | 24 | 1,8 | 7,5 | Bonne | **4,8** | ND | ND |
| 3 | 61,4 | **26,6** | **10,3** | 1,7 | **17** | 2,3 | 6,1 | **Fentes** | ND | ND | ND |
| 4 | 60,6 | **25,8** | 12,0 | 1,6 | 19,2 | 2,3 | 7,5 | Bonne | 3,3 | ND | ND |
| 5 | 62,0 | **24,3** | 12,0 | 1,7 | 19,5 | 2,6 | 7,1 | Bonne | 2,8 | ND | ND |
| 6 | 62,3 | **23,1** | 13,3 | 1,3 | 20 | 2,7 | 10,6 | Bonne | 1,7 | ND | ND |
| 7 | 63,2 | **22,4** | 12,8 | 1,6 | 20 | 2,8 | 8 | Bonne | 1,6 | ND | ND |
| 8 | 64,4 | 21,6 | 12,9 | 1,1 | 18,5 | 3,0 | 11,7 | Bonne | 1,2 | ND | ND |
| 9 | 63,6 | 21,6 | 12,8 | 2,0 | 21,5 | 2,9 | 6,5 | Bonne | 0,9 | 3,5 | ND |
| 10 | 68,1 | 21,0 | **10,0** | 0,9 | **17** | 3,2 | 11,1 | **Fentes** | ND | ND | ND |
| 11 | 62,8 | 21,0 | 15,0 | 1,2 | 21 | 3,0 | 12,5 | Bonne | 0,8 | ND | >1745 |
| 12 | 64,8 | 20,7 | 12,6 | 1,8 | 22,0 | 3,1 | 7,0 | Bonne | 0,9 | ND | ND |
| 13 | 65,6 | 20,5 | 11,3 | 1,6 | 19,5 | 3,2 | 7,1 | Bonne | 0,6 | ND | ND |
| 14 | 66,8 | 19,9 | **9,7** | 1,7 | **16,7** | 3,4 | 5,8 | **Fentes** | ND | ND | ND |
| 15 | 65,7 | 19,8 | 13,2 | 1,3 | 19,5 | 3,3 | 10,1 | Bonne | 0,7 | ND | ND |
| 16 | 65,5 | 19,7 | 13,3 | 1,5 | 20,5 | 3,3 | 8,6 | Bonne | 1,0 | ND | ND |
| 17 | 65,8 | 19,4 | 13,7 | 1,1 | 19,0 | 3,4 | **12,5** | Bonne | 1,0 | ND | ND |
| 18 | 66,7 | 18,4 | 13,1 | 1,8 | 21 | 3,6 | 7,3 | Bonne | 0,1 | 3,5 | ND |
| 19 | 66,4 | 18,4 | 13,5 | 1,7 | 21,5 | 3,6 | 7,9 | Bonne | 0,4 | ND | ND |
| 20 | 66,4 | 18,1 | 14,2 | 1,3 | 20,5 | 3,7 | **10,6** | Bonne | 0,8 | ND | ND |
| 21 | 66,2 | 18,0 | 14,1 | 1,7 | 22,0 | 3,7 | 8,2 | Bonne | 0 | ND | ND |
| 22 | 67,0 | 17,8 | 13,3 | 1,8 | 21,5 | 3,8 | 7,2 | Bonne | 0 | ND | ND |
| 23 | 66,5 | 17,8 | 13,9 | 1,8 | 22,0 | 3,7 | 7,9 | Bonne | 0 | 3,0 | ND |
| 24 | 68,3 | 17,8 | 12,0 | 1,9 | 20,0 | 3,8 | 6,3 | Bonne | 0,1 | ND | ND |
| 25 | 68,8 | 17,3 | 12,7 | 1,2 | 19,0 | 4,0 | **10,7** | Bonne | 0,6 | ND | ND |
| 26 | 67,0 | 17,2 | 14,0 | 1,8 | 22,0 | 3,9 | 7,6 | Bonne | 0 | ND | >1740 |
| 27 | 67,3 | 17,2 | 13,7 | 1,8 | 22 | 3,9 | 7,7 | Bonne | 0 | ND | ND |
| 28 | 72,2 | 17,2 | **9,8** | 0,8 | 14,0 | 4,2 | 12,0 | **Fentes** | ND | ND | ND |
| 29 | 65,8 | 16,9 | **15,2** | 2,1 | **24,5** | 3,9 | 7,2 | Bonne | 0 | ND | **1730** |
| 30 | 68,2 | 16,9 | 13,1 | 1,8 | 21,5 | 4,0 | 7,1 | Bonne | 0 | ND | ND |
| 31 | 69,6 | 16,8 | 12,0 | 1,6 | 19,0 | 4,1 | 7,7 | Bonne | 0 | ND | ND |
| 32 | 70,3 | 16,5 | 12,1 | 1,1 | 17,5 | 4,3 | **11,2** | Bonne | 1,3 | ND | ND |
| 33 | 69,1 | 16,1 | 13,0 | 1,8 | 21,5 | 4,3 | 7,1 | Bonne | 0 | ND | ND |
| 34 | 70,4 | 16 | 12,6 | 1,0 | 17,5 | 4,4 | **12,6** | Bonne | 0,7 | ND | ND |
| 35 | 67,6 | 16 | 14,0 | 2,4 | 23 | 4,2 | 5,8 | Bonne | 0 | ND | ND |
| 36 | 70,1 | 15,9 | 12,3 | 1,7 | 20 | 4,4 | 7,4 | Bonne | 0 | ND | ND |
| 37 | 70,1 | 15,8 | 12,3 | 1,7 | 20,0 | 4,4 | 7,2 | Bonne | ND | 3,0 | ND |
| 38 | 73,2 | 15,8 | **9,7** | 1,3 | **16,0** | 4,6 | 7,5 | **Fentes** | ND | ND | ND |
| 40 | 67,3 | 15,5 | **15,0** | 2,1 | **24,5** | 4,3 | 7 | Bonne | 0 | ND | **1723** |
| 41 | 70,5 | 15,5 | 12,4 | 1,6 | 20 | 4,5 | 7,6 | Bonne | 0 | ND | 1744 |
| 42 | 68,6 | **15,2** | 13,4 | 1,7 | 21 | 4,5 | 7,9 | Bonne | 0 | 5,7 | ND |
| 43 | 70,9 | **14,4** | 12,8 | 1,8 | 21 | 4,9 | 7,1 | Bonne | 0 | **6,1** | ND |

Le tableau 1 permet de faire les observations suivantes :
La faisabilité des produits est bonne lorsque le taux de silice est supérieur à 10,5%, de préférence supérieur à 12 % et lorsque la quantité de phase vitreuse est supérieure à 19%.

Les résultats au test A sont significativement améliorés par rapport au produit de référence lorsque le taux de zircone est inférieur à 22%. Les résultats au test A deviennent très bons, avec un taux d'exsudation inférieur à 0,5%, lorsque le taux de zircone est inférieur à 19%, en particulier si le rapport du taux de silice au taux de soude est inférieur à 9, de préférence inférieur à 8.

Les produits présentant les meilleurs résultats ont un rapport Al₂O₃/ZrO₂ supérieur ou égal à 2,9. De préférence, les produits selon l'invention présentent un rapport Al₂O₃/ZrO₂ inférieur ou égal à 4,5.

La résistance à la corrosion en phase vapeur, mesurée par le test B, est améliorée par rapport à celle du produit de référence. Pour cela il est nécessaire de garder le taux de zircone au dessus de 15,5%.

Pour avoir un résultat au moins équivalent à celui du produit de référence dans le test C, la quantité de phase vitreuse doit être inférieure à 24%, de préférence inférieure à 22%.

Les résultats des tests B et C démontrent la possibilité d'utiliser les produits de l'invention dans les superstructures ou les voûtes des fours de verrerie.

Par ailleurs, les inventeurs ont observé que les produits selon l'invention présentent un comportement dilatométrique amélioré par rapport au produit AZS de référence, le retrait volumique à la transformation de la zircone lié étant faible. Avantageusement, les problèmes d'ouverture de joints de blocs en sont limités.

L'analyse cristallographique des produits de l'invention révèle généralement 15,5 à 22% de cristaux de zircone libre, 17 à 23% de phase vitreuse, le complément étant du corindon. La porosité, mesurée par le rapport du volume des pores au volume apparent total, est inférieure à 5%.

Comme cela apparaît clairement à présent, le produit selon l'invention présente une exsudation réduite et une bonne faisabilité industrielle. Avantageusement, le produit selon l'invention peut être fabriqué au moyens des seuls constituants des produits AZS classiques, sans ajouter d'espèces supplémentaires. La fabrication en est simplifiée et d'un coût réduit.

Bien entendu, la présente invention n'est pas limitée aux modes de réalisation décrits et représentés fournis à titre d'exemples illustratifs et non limitatifs.

En particulier, l'invention n'est pas limitée par le procédé de fabrication ou par le four de fusion mis en oeuvre. Tout procédé classiquement utilisé pour fondre et couler des produits AZS peut être mis en oeuvre.

Un exemple de procédé adapté pour fondre les matières premières est par exemple décrit dans le brevet français N° 1 208 577. Selon ce procédé, la longueur de l'arc est réglée pour que son action réductrice soit minimale, l'arc ou un barbotage de gaz, de préférence oxydant, par exemple de l'air ou de l'oxygène assurant un brassage de la masse fondue. La longueur de l'arc peut par exemple être déterminée pour coïncider au phénomène de l'arc sifflant.

## Revendications

1. Produit réfractaire fondu et coulé de type AZS, **caractérisé par** une analyse chimique comprenant, en pourcentages en poids :
ZrO₂ : 15,5 à 22 %,
SiO₂: 10,5 à 15 %
Na₂O+K₂O+Li₂O : 1,0 à 2,5 %
Impuretés : < 1 %
Al₂O₃ : complément à 100 %.

2. Produit selon la revendication 1, **caractérisé en ce que** le rapport pondéral Al₂O₃ / ZrO₂ soit supérieur ou égal à 2,9 et/ou inférieur ou égal à 5,5.

3. Produit selon l'une des revendications 1 et 2, **caractérisé en ce que** le rapport pondéral SiO₂/(Na₂O+K₂O+Li₂O) est inférieur à 9.

4. Produit selon la revendication 3, **caractérisé en ce que** le rapport pondéral SiO₂/(Na₂O+K₂O+Li₂O) est inférieur à 8.

5. Produit selon l'une quelconque des revendications précédentes, **caractérisé en ce que** le rapport pondéral SiO₂/(Na₂O+K₂O+Li₂O) est supérieur à 7.

6. Produit selon l'une quelconque des revendications précédentes, **caractérisé en ce que** la teneur en ZrO₂, en pourcentages en poids, est inférieure ou égale à 19 %.

7. Produit selon l'une quelconque des revendications précédentes, **caractérisé en ce que** la teneur totale en impuretés est inférieure à 0,5 % et/ou la teneur d'une espèce d'impureté quelconque est inférieure à 0,1 %, en pourcentages en poids.

8. Produit selon l'une quelconque des revendications précédentes, **caractérisé en ce que** le taux de phase vitreuse est supérieur ou égal à 17% et/ou inférieur ou égal à 24%.

9. Produit selon la revendication 8, **caractérisé en ce que** le taux de phase vitreuse est supérieur ou égal à 19% et/ou inférieur ou égal à 22%.

10. Utilisation d'un produit réfractaire selon l'une quelconque des revendications précédentes dans une superstructure ou une voûte d'un four de verrerie.

## Claims

1. An AZS type fused cast refractory product, **characterized by** a chemical analysis including, as a percentage by weight:
• ZrO₂: 15.5% to 22%;
• SiO₂: 10.5% to 15%;
• Na₂O + K₂O + Li₂O: 1.0% to 2.5%;
• impurities: < 1%;
• Al₂O₃: complement to 100%.

2. A product according to claim 1, **characterized in that** the Al₂O₃/ZrO₂ weight ratio, is more than or equal to 2.9 and/or less than or equal to 5.5.

3. A product according to claims 1 and 2, **characterized in that** the SiO₂/ (Na₂O + K₂O + Li₂O) weight ratio is less than 9.

4. A product according to claim 3, **characterized in that** the SiO₂/ (Na₂O + K₂O + Li₂O) weight ratio is less than 8.

5. A product according to any preceding claim, **characterized in that** the SiO₂/ (Na₂O + K₂O + Li₂O) weight ratio is more than 7.

6. A product according to any preceding claim, **characterized in that** the ZrO₂ content, as a percentage by weight, is less than or equal to 19%.

7. A product according to any preceding claim, **characterized in that** the total amount of impurities is less than 0.5% and/or the amount of any species of impurity is less than 0.1%, as a percentage by weight.

8. A product according to any preceding claim, **characterized in that** the vitreous phase content is more than or equal to 17% and/or less than or equal to 24%.

9. A product according to claim 8, **characterized in that** the vitreous phase content is more than or equal to 19% and/or less than or equal to 22%.

10. Use of a refractory product according to any preceding claim, in a superstructure or a crown of a glass furnace.

## Patentansprüche

1. Geschmolzen und gegossenes feuerfestes AZS-(Aluminiumoxid-Zirkoniumoxid-Siliziumoxid-) Produkt, **gekennzeichnet durch** eine chemische Zusammensetzung, welche folgende prozentuale Masseanteile aufweist:
ZrO₂: 15,5 Gew.-% bis 22 Gew.-%
SiO₂: 10,5 Gew.-% bis 15 Gew.-%
Na₂O+K₂O+Li₂O: 1,0 Gew.-% bis 2,5 Gew.-%
Unreinheiten: < 1 Gew.-%
Al₂O₃: Vervollständigung zu 100 Gew.-%.

2. AZS-Produkt nach Anspruch 1, **dadurch gekennzeichnet, dass** das Massenverhältnis Al₂O₃/ZrO₂ größer oder gleich 2,9 und/oder kleiner oder gleich 5,5 ist.

3. AZS-Produkt nach Anspruch 1 und 2, **dadurch gekennzeichnet, dass** das Massenverhältnis SiO₂/(Na₂O+K₂O+Li₂O) kleiner als 9 ist.

4. AZS-Produkt nach Anspruch 3, **dadurch gekennzeichnet, dass** das Massenverhältnis SiO₂/(Na₂O+K₂O+Li₂O) kleiner als 8 ist.

5. AZS-Produkt nach einem der oben genannten Ansprüche, **dadurch gekennzeichnet, dass** das Massenverhältnis SiO₂/(Na₂O+K₂O+Li₂O) größer als 7 ist.

6. AZS-Produkt nach einem der oben genannten Ansprüche, **dadurch gekennzeichnet, dass** es einen ZrO₂-Massenanteil von kleiner oder gleich 19 Gew.-% aufweist

7. AZS-Produkt nach einem der oben genannten Ansprüche, **dadurch gekennzeichnet, dass** gemessen in Massenanteilen der Gesamtgehalt von Unreinheiten, kleiner oder gleich 0,5 Gew.-% ist und der Massenanteil einer beliebigen Art von Unreinheit kleiner als 0,1 Gew.-% ist.

8. AZS-Produkt nach einem der oben genannten Ansprüche, **dadurch gekennzeichnet, dass** der Anteil der glasartigen Phase größer oder gleich 17 Gew.-% und/oder kleiner oder gleich 24 Gew.-% ist.

9. AZS-Produkt nach Anspruch 8, **dadurch gekennzeichnet, dass** der Anteil der glasartigen Phase größer oder gleich 19 Gew.-% und/oder kleiner oder gleich 22 Gew.-% ist.

10. Verwendung eines hitzebeständigen Produkts nach einem der oben genannten Ansprüche in einem Überbau oder einem Gewölbe eines Glasschmelzofens
